# EUROPEAN PATENT SPECIFICATION

(11) **EP 1 777 869 B1**
(45) Date of publication and mention of the grant of the patent: **03.02.2010**
(21) Application number: 06022149.6
(22) Date of filing: 23.10.2006
(51) Int. Cl.: H04L 5/02, H04W 4/00

(54) **Apparatus and method for channel scheduling in an OFDM system**
Verfahren und Vorrichtung zur Kanalzuteilung in einem OFDM-System
Procédé et appareil de planification des canaux dans un système OFDM

(30) Priority: 21.10.2005 KR 20050099929; 14.09.2006 KR 20060088979
(43) Date of publication of application: 25.04.2007
(60) Divisional application: 09014647.3
(73) Proprietor: Samsung Electronics Co., Ltd., Suwon-si, Gyeonggi-Do (KR)
(72) Inventor: Kwon, Hwan-Joon, Yeongtong-gu Suwon-si Gyeonggi-do (KR); Lee, Ju-Ho, Yeongtong-gu Suwon-si Gyeonggi-do (KR); Kim, Yu-Chul, Yeongtong-gu Suwon-si Gyeonggi-do (KR)
(74) Representative: Grünecker, Kinkeldey, Stockmair & Schwanhäusser Anwaltssozietät

(56) References cited:
- WO-A-2005/096538
- US-A1- 2004 001 429

## Description

The present invention relates to channel scheduling technology in mobile communication systems. More particularly, the present invention relates to an apparatus and a method for selectively scheduling channels in mobile communication systems which adopt Orthogonal Frequency Division Multiple Access (OFDMA).

Generally, uplink multiple access schemes used in mobile communication systems are largely classified into non-orthogonal multiple access and orthogonal multiple access. In a non-orthogonal multiple access scheme, the reverse signals, which are transmitted from a number of terminals, are not orthogonal to one another. Code Division Multiple Access (CDMA) affords an example of non-orthogonal multiple access.

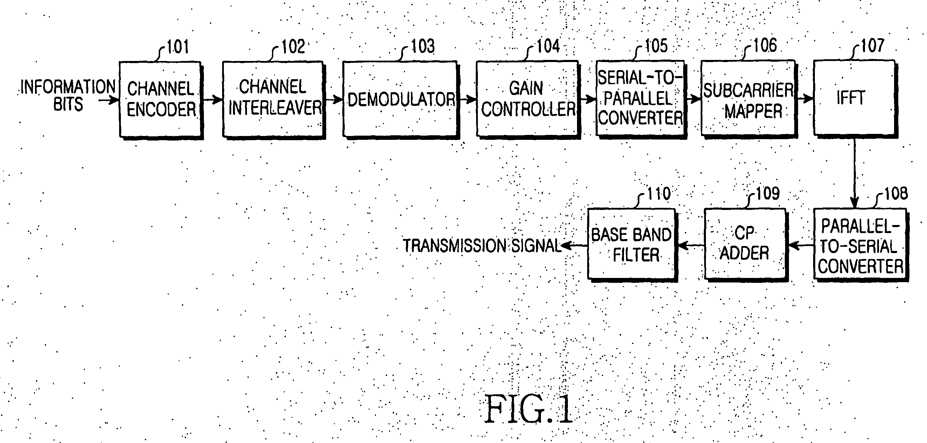

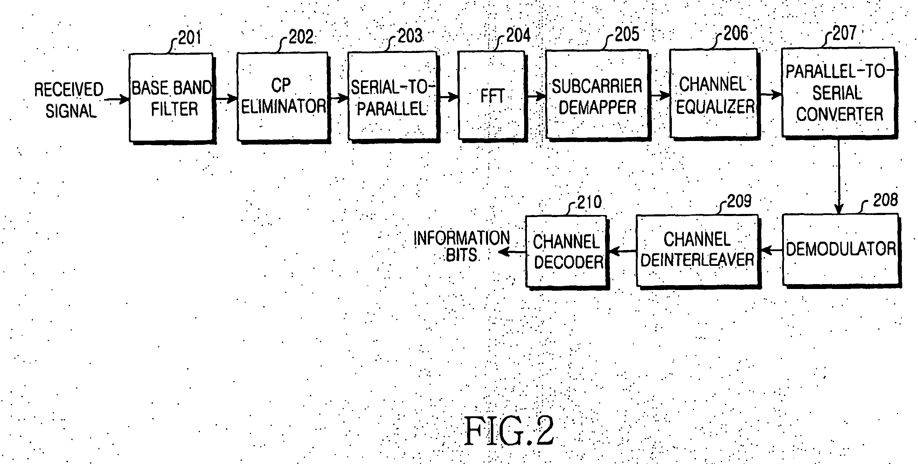

On the other hand, in an orthogonal multiple access scheme, the uplink signals, which are transmitted from a number of terminals, are orthogonal to one another. For example, schemes employing orthogonal multiple access include Frequency Division Multiple Access (FDMA) and Time Division Multiple Access (TDMA). In general packet data mobile communication systems, the orthogonal multiple access adopts a mixed form of Frequency Division Multiple Access (FDMA) and Time Division Multiple Access (TDMA). Namely, a number of transmissions which serve users are distinguished from one another in the frequency domain and in the time domain. Orthogonal Frequency Division Multiple Access (OFDMA) affords a typical example of the conventional Frequency Division Multiple Access. In the above OFDMA, a number of terminals transmit signals on sub-carriers which are different from one another, and therefore the respective signal of every terminal can be distinguished from one another. A transmitter-receiver which adopts OFDMA will be described hereinafter with reference to FIGS. 1 and 2.

FIG. 1 shows a transmitter in a mobile communication system which adopts the conventional OFDMA. Referring to FIG. 1, the respective queue of information bits, which needs to be transmitted, is input to a channel encoder 101. The channel encoder 101 carries out a channel-encoding function in a predetermined scheme with respect to the queue of information bits, and outputs a channel-encoded signal to a channel interleaver 102. The channel encoder 101 can be a block encoder, a convolution encoder, a turbo encoder, or a Low Density Parity Check (LDPC).

The channel interleaver 102, which receives the output of the channel-encoder 101, carries out a channel-interleaving function in the prescribed process, and outputs a channel-interleaved signal to a modulator 103. While omitted in FIG. 1, it is clear that a rate matching block consisting of a repeater and a puncturing unit can exist between the channel encoder 101 and the channel interleaver 102. The modulator 103, which receives the output of the channel interleaver 102, carries out the modulation process, and outputs modulated symbols to a gain controller 104. The above modulation process may include Quadrature Phase Shift Keying (QPSK), 8 Phase Shift Keying (PSK) and 16 Quadrature Amplitude Modulation (QAM). The gain controller 104 multiplies a gain determined by prescribed rules to each channel, and outputs a multiplied signal to a serial-parallel converter 105. The serial-parallel converter 105, which serially receives an output of the gain controller 104, converts the output into a parallel signal, and outputs the parallel signal to a subcarrier mapper 106. The subcarrier mapper 106, which receives in parallel the queues of information bits, maps the received queues to subcarriers by predetermined rules, and outputs mapped signals to an Inverse Fast Fourier Transform (IFFT) unit 107. The IFFT unit 107 is assumed to receive N number of symbols which are input in parallel. This assumption is based on the fact that the IFFT unit 107 transforms the queues of N number of information bits.

Therefore, symbols in the frequency domain are transformed into symbols in the time domain with the Inverse Fast Fourier Transformation process by the IFFT unit 107 which inputs N number of symbols in parallel. The symbols, which are transformed from the frequency domain to the time domain, are input to a parallel-serial converter 108. The parallel-serial converter 108, which receives in parallel the N number of symbols in the time domain, converts the received data to output sequentially the N number of queues of information bits. The N number of queues of information bits, which are sequentially output, are designated "OFDM symbols" hereinafter.

The OFDM symbols, which are output from the parallel-serial converter 108, are input to a Cyclic Prefix (CP) adder 109. The CP adder 109 reversely copies as many bits as the prescribed number from the last bits among the input OFDM symbols, and inserts the copied bits in front of the first bits of the OFDM symbols. Cyclic prefix symbols are added in order to eliminate an effect of multi-path channels. The OFDM symbols, to which the CP symbols are added, are output to a base band filter 110. The base band filter 110, which receives the OFDM symbols having the added CP, generates a base band signal which is thereafter received via a receiver on wireless channels. A configuration and operation of the receiver will be described hereinafter with reference to FIG. 2. FIG. 2 shows a block diagram of a receiver of a mobile communication system which adopts a general OFDMA.

The base band signal, which is received on the wireless channel, is processed by a base band filter 201. The base band filter 201 corresponds to a matched filter of the base band filter 110 of the transmitter. An output of the base band filter 201 is input to a CP eliminator 202. The CP eliminator 202 removes cyclic prefix symbols, which are polluted under the effect of multi-path, and outputs a serial signal after the CP is eliminated. Therefore, the serial output signal is input to a serial-parallel converter 203 in order to carry out fast Fourier transform. The serial-parallel converter 203 receives serially input symbols, and converts the serial symbols into a parallel signal having N number of units.

Conversion of the serial input symbols into output parallel signals in the unit of the N number is based on the Fourier transform that was performed in the unit of the N number by the transmitting block. Therefore, while inputting parallel data in the unit of the N number, a Fast Fourier Transform (FFT) unit 204 performs Fourier transform. Namely, the Fast Fourier Transform unit 204 transforms symbols in the time domain into symbols in the frequency domain. The symbols, which are transformed into the frequency domain, are input to a subcarrier demapper 205. The subcarrier demapper 205 extracts symbols from the symbols in the frequency domain to output subcarriers, which are mapped to the respective physical channels. Extracted subcarriers are input into a channel equalizer 206. While receiving the extracted subcarriers, the channel equalizer 206 performs a prescribed process of channel equalizing. While there exists many schemes for equalizing channels, these schemes do not belong to the scope of subject matter of the present invention. An output of the channel equalizer 206 is input to a parallel-serial converter 207. While receiving symbols in parallel, the parallel-serial converter 207 converts the parallel symbols into serial symbols. A demodulator 208 inputs the serial symbols, which are converted in the unit of the N number, and performs a prescribed demodulation process which includes 16 Quadrature Amplitude Modulation (QAM), 8 Phase Shift Keying (PSK) and Quadrature Phase Shift Keying (QPSK). An output signal of the demodulator 208 is input to a channel deinterleaver 209. While receiving a demodulated signal, the channel deinterleaver 209 performs a prescribed process of channel deinterleaving. An output signal of the channel deinterleaver 209 is input to a channel decoder 210. While inputting the deinterleaved signal, the channel demodulator 210 performs a prescribed process of channel demodulation to output the queues of information bits.

On the other hand, by selectively scheduling channels, uplink mobile communication systems can increase system capacity even under limited wireless resources. In the above, the uplink means a direction of transmission from terminals to the base station. In order to transmit data, technology for selectively scheduling channels selects a time interval or the frequency band of the superior channel among channels which vary on the time axis or on the frequency axis. Therefore, it means technology through which system capacity can be increased.

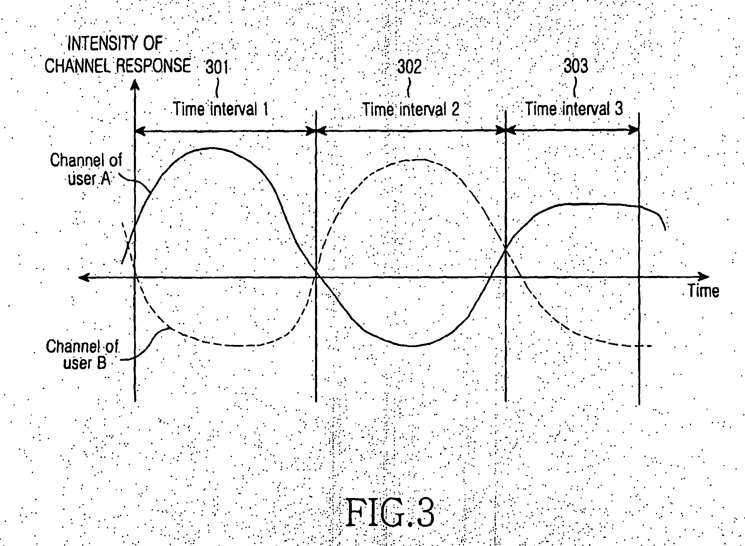

FIG. 3 shows an example of selectively scheduling channels on a time axis in a mobile communication system which adopts a general OFDM.

Referring to FIG. 3, a horizontal axis represents a time axis, and a vertical axis represents an intensity of channel responses. In FIG. 3, the solid line represents channel responses which can vary with the time of a user A, and the dotted line represents channel responses which can vary with the time of a user B. With reference to FIG. 3, whereas a channel of user A is superior to a channel of user B within time interval 1 301, the channel of user B is superior to the channel of user A within time interval 2 302. Within time interval 3 303, the channel of user A is superior to the channel of user B. With this understanding, by selectively scheduling channels on the time axis, data can be transmitted on the channel of user A within time interval 1 301, while data can be transmitted on the channel of user B within time interval 2 302. Within time interval 3 303, likewise, data can be transmitted on a channel of user A. As a result, technology that selectively schedules channels is able to increase system capacity.

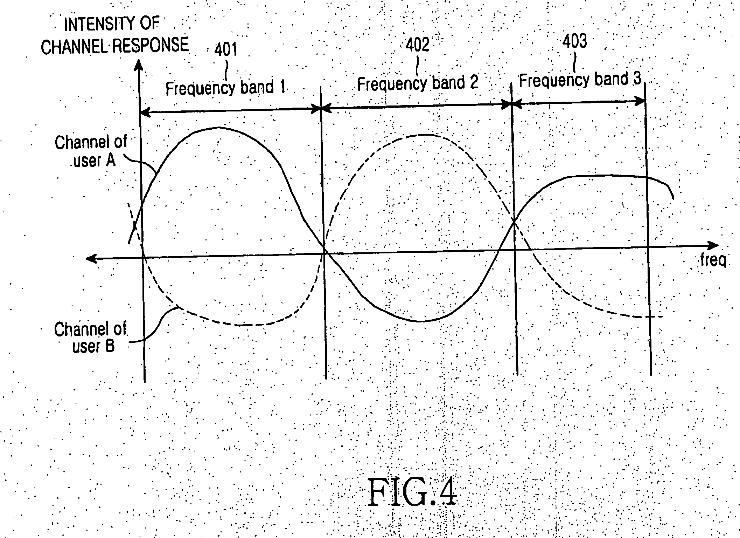

FIG. 4 shows an example of selectively scheduling channels on a frequency axis in a mobile communication system which adopts a general OFDM.

Referring to FIG. 4, a horizontal axis represents a frequency axis, and a vertical axis represents an intensity of channel responses. In FIG. 4, the solid line represents channel responses which can vary with the frequency of a user A, and the dotted line represents channel responses which can vary with the frequency of a user B. With reference to FIG. 4, while a channel of user A is superior to a channel of user B within frequency band 1 401, a channel of user B is superior to a channel of user A within frequency band 2 402. With this understanding, by selectively scheduling channels on the frequency axis, data can be transmitted on the channel of user A within frequency band 1 401 and data can be transmitted on the channel of user B within frequency band 2 402. Within frequency band 3 403, likewise, the data can be transmitted on a channel of user A. As a result, technology that selectively schedules channels is able to increase system capacity.

As described above with reference to FIGS. 3 to 4, technology is provided for selectively scheduling channels wherein a user can be selected whose intensity of channel response is the best on the time axis or on the frequency axis, and wherein data can be transmitted by the selected user. As a result, this technology is able to maximize system capacity even under limited wireless resources. Furthermore, in order that a scheduler of a base station may select a user (in other words, a terminal) whose intensity of channel response is the best among a number of terminals within any time interval or within any frequency band, and allow the terminal to transmit data, the scheduler of the base station can determine in advance the intensities of uplink channel responses of all the terminals. For that purpose, a scheme for transmitting the uplink pilot signal is used. For example, all the terminals in a system may backward transmit pilot signals continuously or in a specified period regardless of data transmission. The scheduler of the base station measures the quality of the pilot signals from a number of terminals in order to select a terminal whose channel is superior to others on the time axis or on the frequency axis, and allows a selected terminal to transmit real data.

The problem of the scheme wherein the channels of the terminals are selectively scheduled by measuring the quality of the pilot signals which are backward transmitted from the terminals, exists in that the mobile communication systems adopt orthogonal multiple access. Namely, as all the terminals in the mobile communication system adopting orthogonal frequency division multiplexing must backward transmit the pilot signals regardless of real data transmission, orthogonal resources are wasted. Orthogonal resources may include OFDM symbols on the time axis, and sub-carriers on the frequency axis.

Also, when there are many users (in other words, terminals) in a system, the orthogonal resources which can be utilized to transmit real data are not enough.

As described above, system capacity can be increased by selectively scheduling channels in mobile communication systems which adopt a general orthogonal frequency division multiplexing access. However, in order to support the selective scheduling of channels, a number of overheads would be required, so that efficient support programs must be established.

Accordingly, there is a need for an improved apparatus and method for selectively scheduling channels in a mobile communication system using OFDMA.

US 2004/001429 A1 discloses dual mode shared OFDM methods/transmitters, receivers and systems. An uplink OFDM protocol is provided, wherein according to the protocol, a wireless terminal has a first transmit chain for generating and transmitting a low rate mode OFDM transmission in a first frequency band of the OFDM band and a second transmit chain for generating and transmitting a burst mode transmission in a second frequency band of the OFDM band, wherein the first frequency band is distinct from the second frequency band. An access channel is provided which is overlaid over the low rate mode transmissions of other users. A system access channel is used by the wireless terminal to transmit a pilot and system access requests while in the standby state. To support uplink transmit power measurement, the pilots from each UE are generated from a coded sequence and are power boosted. The pilot symbol locations of the inter-cell users are preferably offset from each other either in the frequency direction or in the time direction. The system access channel for a given user is two more sub-carriers allocated during certain periodic OFDM symbols. Only users in a standby state are allocated in a system access channel. Once the user goes active, the system access chanel is deallocated and becomes available for allocation for another user. The base station monitors all of the system access channels, performs scheduling accordingly, and during standby is able to maintain timing and synchronization. A random access channel is provided for UEs new to a particular wireless network to access the system. A UE may be considered new to a particular wireless network when it has just been turned on or has been moved into the area covered by the particular wireless network from the domain of another wireless network. If the base station detects the random access channel code successfully it measures the time offset of that UE and then sends the initial dedicated uplink access channel grant, together with the random access channel code index as well as the time offset information.

WO 2005/096538 A1 discloses methods and apparatus for flexible spectrum allocation in communication systems. Following a certain channel sensitive scheduling criterion, the "best" match between a given segment and the user is identified. Channel information, on a reverse link and/or a forward link may be used to schedule users to one or more segments of a shared frequency spectrum. A scheduler may assign the user one or more clusters, provided that at least one cluster is vacant. Such an assignment may be based on, and may be expected to secure, a good channel quality e.g. measure in terms of channel gain. Upon the assignment the user may be exposed to various interfering users operating in the adjacent sectors/cell. The disparity of cluster pattern sets corresponding to different sectors/cells ensures that no user or a small number of users is exposed to a single interfering source, thereby ensuring interference diversity.

Exemplary embodiments of the present invention address at least the above problems and/or disadvantages and provide at least the advantages described below.

It is the object of the present invention to provide an improved apparatus and an improved method for selectively scheduling channels in mobile communication systems adopting orthogonal frequency division multiple access, wherein efficient support is given to the selective schedule of channels in mobile communication systems adopting orthogonal frequency division multiplexing.

This object is solved by the subject matter of the independent claims.

Preferred embodiments are defined by the dependent claims.

It is an aspect of the present invention to provide an apparatus and a method for selectively scheduling channels in mobile communication systems adopting Orthogonal Frequency Division Multiple Access wherein scheduling of channels is performed, while pilot signals for the uplink signal-to-noise ratio are being transmitted from a number of terminals, in mobile communication systems adopting Orthogonal Frequency Division Multiple Access.

Furthermore, it is another aspect of the present invention to provide an apparatus and a method for selectively scheduling channels in mobile communication systems adopting Orthogonal Frequency Division Multiple Access, wherein the total uplink system capacity is increased by adaptively controlling the volume amount of uplink overhead in accordance with the conditions of the system.

In order to accomplish the object and the aspects of the present invention, a method for selectively scheduling channels at a base station in a mobile communication system adopting Orthogonal Frequency Division Multiple Access according to an exemplary embodiment of the present invention, includes, in requiring a terminal to transmit a designated pilot, selectively scheduling channels after receiving the pilot from the terminal within a specified frequency band or over the whole frequency band, requiring the terminal to transmit data having a result of the scheduling therewith, and receiving from the terminal the data having the result of the scheduling therewith.

In order to accomplish the object and the aspects of the present invention, an apparatus for selectively scheduling channels at a base station in a mobile communication system adopting Orthogonal Frequency Division Multiple Access, according to an exemplary embodiment of the present invention, includes a receiving unit for receiving a pilot from a terminal within a specified frequency band or over the whole frequency band after the base station requires the terminal to transmit the pilot, a scheduling unit for selectively scheduling channels with the pilot which is received by the receiving unit within a specified frequency band or over the whole frequency band, and a unit for transmitting scheduling information and for requiring the terminal to transmit data having a result of the scheduling therewith.

In order to accomplish the object and the aspects of the present invention, an apparatus for selectively scheduling channels in a mobile communication system adopting Orthogonal Frequency Division multiplexing according to an exemplary embodiment of the present invention includes in an apparatus for selectively scheduling channels at a terminal in a mobile communication system adopting Orthogonal Frequency Division Multiple Access, a unit for receiving from a base station scheduling information which is necessary to transmit the pilot, and a unit for transmitting a pilot to the base station on the basis of the scheduling information.

The above object and other aspects, features, and advantages of the present invention will be more apparent from the following detailed description taken in conjunction with the accompanying drawings, in which:
FIG. 1 is a block diagram illustrating a transmitter in mobile communication systems adopting a general Orthogonal Frequency Division Multiplexing;
FIG. 2 is a block diagram illustrating a receiver in the mobile communication systems adopting the general Orthogonal Frequency Division Multiplexing;
FIG. 3 illustrates an example of selectively scheduling channels on the time axis in the mobile communication systems adopting the general Orthogonal Frequency Division Multiplexing;
FIG. 4 illustrates an example of selectively scheduling channel on the frequency axis in the mobile communication systems adopting the general Orthogonal Frequency Division Multiplexing.
FIG. 5 is a block diagram illustrating a transmitter-receiver at a base station according to an exemplary embodiment of the present invention;
FIG. 6 is a block diagram illustrating a transmitter-receiver at a terminal according to an exemplary embodiment of the present invention;
FIG. 7 illustrates a control flowchart showing selectively scheduling uplink channels in a mobile communication system adopting Orthogonal Frequency Division Multiple Access according to an exemplary embodiment of the present invention;
FIG. 8 illustrates a control flowchart showing selectively scheduling uplink channels in a mobile communication system adopting Orthogonal Frequency Division Multiple Access according to another exemplary embodiment of the present invention;
FIG. 9 is a view illustrating the structure of a uplink frame according to an exemplary embodiment of the present invention; and
FIG. 10 is a view illustrating the structure of a uplink frame according to another exemplary embodiment of the present invention.

The matters defined in the description such as a detailed construction and elements are provided to assist in a comprehensive understanding of the embodiments of the invention and are merely exemplary. Accordingly, those of ordinary skill in the art will recognize that various changes and modifications of the embodiments described herein can be made without departing from the scope and spirit of the invention. Also, descriptions of well-known functions and constructions are omitted for clarity and conciseness. Hereinafter, exemplary embodiments of the present invention will be described in detail with reference to the accompanying drawings.

According to an exemplary embodiment of the present invention, there are two kinds of pilots in a mobile communication system adopting Orthogonal Frequency Division Multiple Access. They are a channel estimate pilot and a Signal-to-Noise Ratio (SNR) measure pilot. In support of selectively scheduling uplink channels for an uplink data transmission, scheduling is also performed while the signal-to-noise ratio measure pilot of a terminal is being transmitted. The channel estimate pilot represents a pilot for coherent demodulation during an uplink data transmission. The signal-to-noise ratio measure pilot represents a pilot only for selectively scheduling channels regardless of demodulation during data transmission.

In conventional mobile communication systems, an uplink scheduling represents scheduling for data transmission of a terminal. However, according to an exemplary embodiment of the present invention, a base station not only carries out scheduling for a uplink data transmission of a terminal, but also carries out scheduling for an uplink pilot transmission.

Furthermore, according to an exemplary embodiment of the present invention, a structure of an uplink frame is provided to efficiently support selective scheduling of uplink channels.

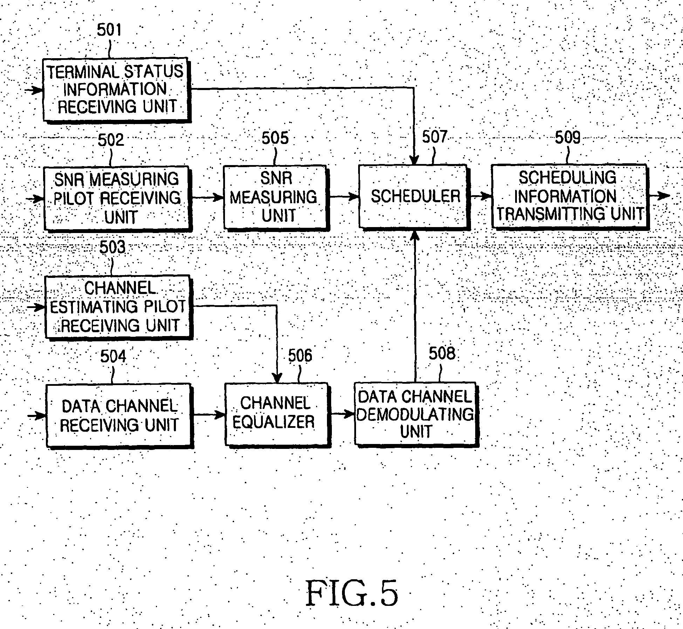

First of all, a transmitter-receiver at a base station in support of selectively scheduling uplink channels according to an exemplary embodiment of the present invention will be described with reference to FIG. 5. FIG. 5 is a block diagram illustrating a transmitter-receiver at a base station according to an exemplary embodiment of the present invention.

Referring to FIG. 5, a unit for receiving terminal status information 501 receives status information of a terminal, which is backward transmitted from the terminal, and transmits the received status information to a scheduler 507.

A receiving unit 502 receives a pilot from the terminal for measuring Signal-to-Noise Ratio, and outputs the received pilot to a Signal-to-Noise Ratio (SNR) measuring unit 505.

The SNR measuring unit 505 measures the signal-to-noise ratio of an uplink channel of a respective terminal.

A receiving unit 503 receives a pilot from the terminal, which is necessary to demodulate data channel, estimates an uplink channel of the terminal, and transmits an estimated uplink channel to a channel equalizer 506.

A data channel receiving unit 504 receives data from the terminal. An output of the data channel receiving unit 504 is input to the channel equalizer 506.

The channel equalizer 506 receives a channel estimation value from the unit 503 that receives the pilot for estimating a channel, performs a channel-equalizing function while receiving an output of the unit 504 that receives data from the terminal and feeds an output thereof to a unit 508 for demodulating the data channel.

The demodulating unit 508 demodulates the data from the terminal while receiving the output of the channel equalizer 506.

Meanwhile, the scheduler 507 performs a designated function of scheduling while receiving an output of the unit 501 for receiving status information of the terminal, an output of the SNR measuring unit 505, and an output of the demodulating unit 508 for the terminal data. Namely, the scheduler 507 performs a function of selectively scheduling channels as provided in an exemplary embodiment of the present invention. In performing the scheduling function, the scheduler 507 determines when data may be transmitted from the terminal, and by which orthogonal resources the data from the terminal may be transmitted. A result of the scheduling is sent to a unit 509 for transmitting the scheduling information.

The unit 509 for transmitting the scheduling information transmits the result of scheduling to a terminal.

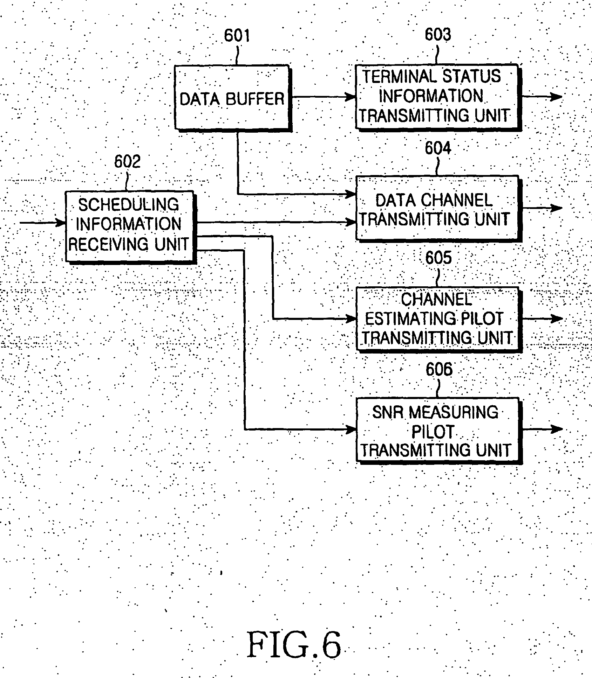

FIG. 6 is a block diagram illustrating a transmitter-receiver at a terminal that supports selectively scheduling uplink channels according to an exemplary embodiment of the present invention.

Referring to FIG. 6, a data buffer 601 represents a data buffer at a terminal. Information on memory capacity of the data buffer 601 is transmitted to a base station by a unit 603 that is provided for transmitting status information of the terminal. Although not illustrated in FIG. 6, when receiving other status information such as transmission power of the terminal, the unit 603 may transmit the status information on transmission power of the terminal together with status information on memory capacity of the data buffer. The unit 603 may also transmit other status information beyond that of transmission power and memory capacity.

A unit 602 for receiving information on scheduling receives the information which is transmitted by the scheduling information transmitting unit 509 of the base station. The information on scheduling that the unit 602 receives may include scheduling information on data transmission, on channel estimating pilot transmission which is necessary to demodulate data, on pilot transmission which is necessary to measure the signal-to-noise ratio, and the like. The scheduling information on data transmission, among additional information received by the unit 602, is input to a unit 604 for transmitting channel data, so that the unit 604 transmits data in a designated process. The designated process is the same as a transmitting process in a mobile communication system adopting a general Orthogonal Frequency Division Multiple Access, which was described with reference to FIG. 1. Among the information which was received by the scheduling information receiving unit 602, the scheduling information on channel estimating pilot transmission, which is necessary to demodulate data, is input to a unit 605 for transmitting a pilot for estimating a channel, so that the unit 605 transmits the channel estimating pilot in a designated process. This process is the same as the transmitting process used in a mobile communication system adopting a general Orthogonal Frequency Division Multiple Access which was described with reference to FIG. 1. Among the information which was received by the scheduling information receiving unit 602, the scheduling information on the pilot transmission, which is necessary to measure signal-to-noise ratio, is input to a unit 606 for transmitting a pilot for measuring the signal-to-noise ratio, so that the unit 606 transmits the pilot for measuring the signal-to-noise ratio in a designated process. Here, the process is the same as the transmitting process in a mobile communication system adopting a general Orthogonal Frequency Division Multiple Access, which was described with reference to FIG. 1.

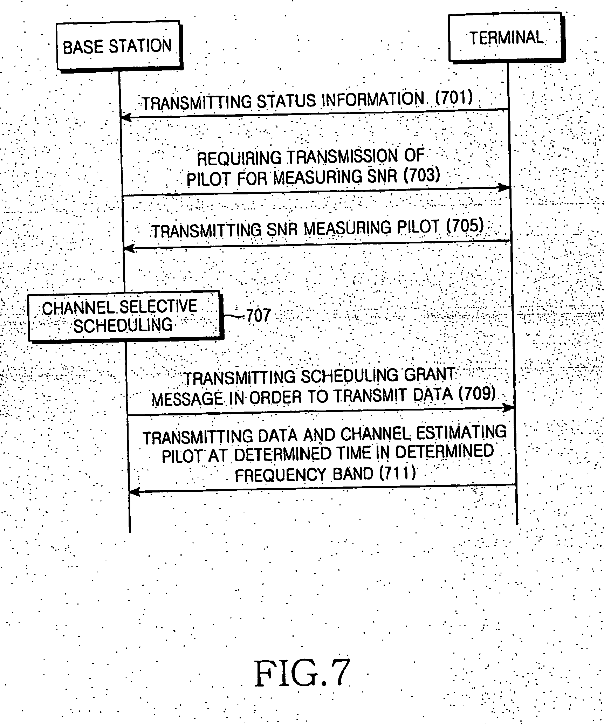

FIG. 7 illustrates a control flowchart showing selectively scheduling uplink channels in a mobile communication system adopting Orthogonal Frequency Division Multiple Access according to an exemplary embodiment of the present invention. Hereinafter, referring to FIG. 7, a control operation will be described in detail when uplink channels are selectively scheduled in mobile communication systems adopting Orthogonal Frequency Division Multiple Access according to an exemplary embodiment of the present invention.

When there exists data to transmit from the data buffer 601, in step 701 the unit 603 for transmitting status information of a terminal transmits the status information of the terminal to a base station. The status information may include the memory capacity of the terminal, the transmission power of the terminal, and so forth. In receiving the status information of the terminal, in step 703 the base station does not allow the terminal to transmit data immediately. Instead, in support of selectively scheduling channels, in step 703 the base station requires the terminal to transmit a pilot for measuring the signal-to-noise ratio.

At this time, the base station transmits to the terminal a grant message concerning the transmission of the pilot for measuring the signal-to-noise ratio within a specified frequency band or over the whole frequency band.

Table 1 represents an example of an exemplary embodiment of a grant message format concerning the transmission of the pilot. As the number of bits which are illustrated in Table 1 are only an example, it is clear that details of the number of bits can vary according to systems.

**Table 1.**

| Field | Number of bits |
|---|---|
| Type | 4 bits |
| MAC ID | 8 bits |
| Channel ID | 6 bits |
| Period | 3 bits |

Referring to Table 1, Type represents the type of message. Namely, the Type is the queue of bits with which the message can be recognized as the grant message concerning the transmission of the pilot. MAC ID represents an identifier of the terminal. Channel ID represents a band in which the pilot for measuring the signal-to-noise ratio is transmitted. According to the value of the field, the pilot for the signal-to-noise ratio could be transmitted over the whole frequency band backward or could be transmitted within a specified frequency band backward. Period represents a period by which the pilot for measuring the signal-to-noise ratio is transmitted. It will be noted that a certain field can be added or omitted in items of Table 1.

After having received the grant message concerning the transmission of the pilot for measuring the signal-to-noise ratio, in step 705 the terminal transmits the pilot for measuring the signal-to-noise ratio within a specified frequency band or over the whole frequency band. After having received from the terminal the pilot for measuring the signal-to-noise ratio, in step 707 the base station measures the signal-to-noise ratio of an uplink channel with the pilot for measuring the signal-to-noise ratio, and performs a designated process in which channels are selectively scheduled with the measured signal-to-noise ratio, and with the status information of the terminal which includes both the memory capacity of a data buffer and information on transmission power of the terminal. The designated process of scheduling determines when the data may be transmitted from the terminal, and by which orthogonal resources the data from the terminal may be transmitted. Based on the result of scheduling, in step 709 the base station transmits to the terminal a scheduling grant message concerning transmission of data. An exemplary feature of the scheduling grant message concerning the transmission of the data is that the scheduling grant message includes not only data transmission from the terminal, but also the transmission of the pilot which is required for coherent demodulation (in other words, the pilot for estimating the channel). However, it must be kept in mind that by a prescribed rule, a transmission of information on the transmission of the pilot for estimating the channel which is required for the coherent demodulation would be omitted in a case where the transmission of the pilot required for demodulation is already mapped to the scheduling grant message concerning the data transmission. In step 711, the terminal, which has received the scheduling grant message in step 709, transmits data within a designated frequency band at a designated time wherein both the time and the frequency are determined by the scheduling grant message, and transmits along with the data the pilot for estimating the channel which is required for the coherent demodulation. The transmission of the pilot for measuring the signal-to-noise ratio which was performed in step 705 may be included in step 711.

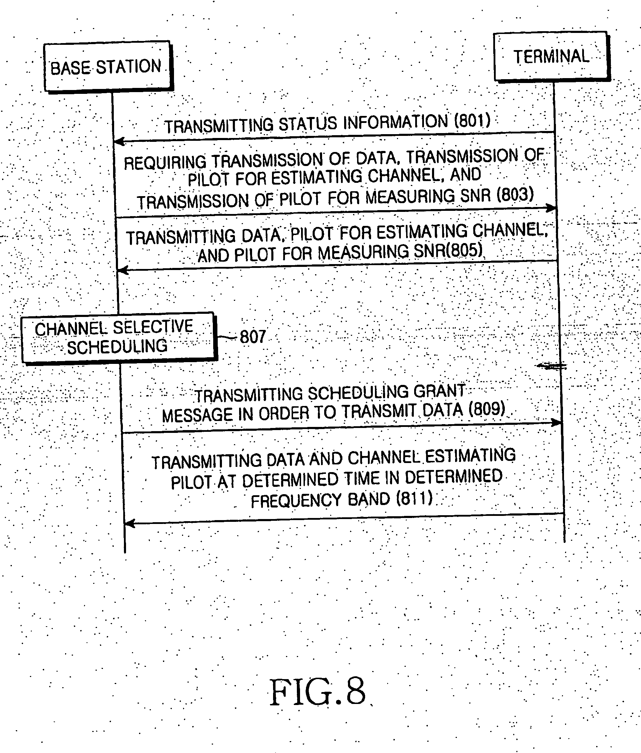

FIG. 8 illustrates a control flowchart showing selectively scheduling uplink channels in a mobile communication system adopting Orthogonal Frequency Division Multiple Access according to another exemplary embodiment of the present invention.

Hereinafter, referring to FIG. 8, a control operation will be described in detail when uplink channels are selectively scheduled in a mobile communication system adopting Orthogonal Frequency Division Multiple Access according to another exemplary embodiment of the present invention.

When a terminal has data to transmit from a data buffer 601 thereof, in step 801 a unit 603 for transmitting status information of the terminal transmits the status information to a base station. The status information may include the memory capacity of a data buffer of the terminal, information on electric power of the terminal, and the like. When receiving the status information of the terminal, in step 803, the base station permits the terminal to transmit data immediately. Then, acknowledgement (in other words, permission) of the data transmission, to which selective scheduling of channels is not applied, corresponds to permission of data transmission which is produced by a designated scheme of scheduling. The acknowledgement of the data transmission is done by transmitting a designated grant message. The grant message may include information on data transmission to the terminal, information on transmission of a pilot for estimating a channel, information on transmission of a pilot for measuring the signal-to-noise ratio in support of selectively scheduling channels at the next time, and the like. In step 805, the terminal which receives the grant message transmits the data, the pilot for estimating the channel, and the pilot for measuring the signal-to-noise ratio in support of selectively scheduling channels at a subsequent time. In step 807, the base station, which has received from the terminal the pilot for measuring the signal-to-noise ratio, performs a designated process in which channels are selectively scheduled. The designated process of scheduling determines when the data may be transmitted from the terminal, and by which orthogonal resources the data from the terminal may be transmitted. Based on the result of scheduling, in step 809 the base station transmits to the terminal a scheduling grant message concerning the transmission of data. An exemplary feature of the scheduling grant message concerning the transmission of the data is that the scheduling message includes not only data transmission from the terminal, but also the transmission of the pilot for estimating the channel which is required for data demodulation. However, it must be kept in mind that by a prescribed rule, a transmission of information on the transmission of the pilot for estimating the channel which is required for the data demodulation would be omitted in a case where the transmission of the pilot required for demodulation is already mapped to the scheduling grant message concerning the data transmission. In step 811, the terminal, which has received the scheduling grant message in step 809, transmits data within a designated frequency band at a designated time wherein both the time and the frequency are determined by the scheduling grant message, and transmits, along with the data, the pilot for estimating the channel which is required for the data demodulation. The transmission of the pilot for measuring the signal-to-noise ratio which has been performed in step 805 may be included in step 811.

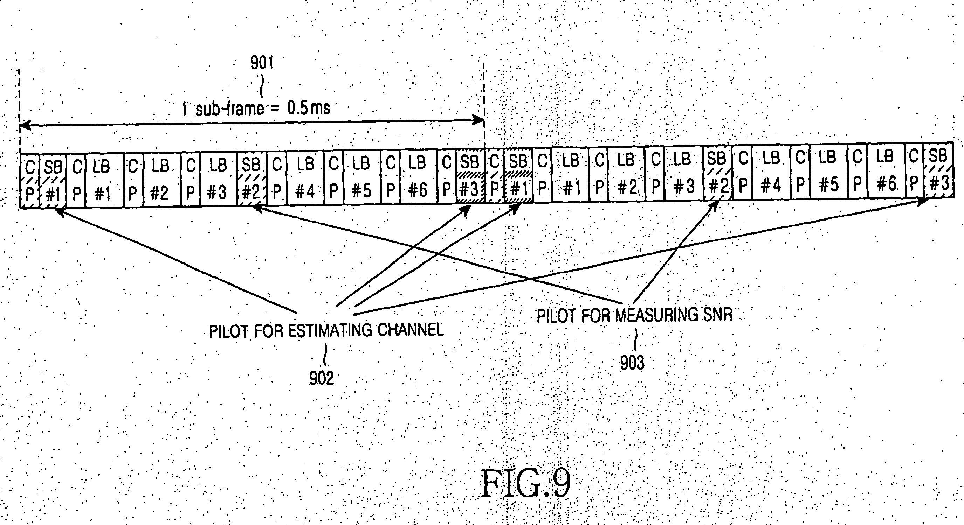

FIG. 9 is a view illustrating an exemplary embodiment of the structure of an uplink frame which is so configured that the frame may efficiently support the uplink channels to be selectively scheduled.

Referring to FIG. 9, reference numeral 901 illustrates a subframe. The subframe 901 represents the minimum amount of time for which a packet is transmitted. A subframe 901 consists of three Short Blocks (SBs) and six Long Blocks (LBs). In the above, three Short Blocks of a subframe are illustrated as SB#1, SB#2, and SB#3, respectively, and six Long Blocks thereof are illustrated as LB#1, LB#2, LB#3, LB#4, LB#5, and LB#6, respectively. Short blocks are used in order to transmit pilots, and long blocks are used in order to transmit data. Furthermore, both short blocks and long blocks have Cyclic Prefixes (CPs) attached thereto. Among three short blocks which are included in a subframe, both an SB#1 and an SB#3 are used to transmit pilots 902 for estimating channels, and an SB#2 is used to transmit the pilot 902 for measuring the signal-to-noise ratio. It will be noted that that the short blocks may be located at positions other than in FIG. 9.

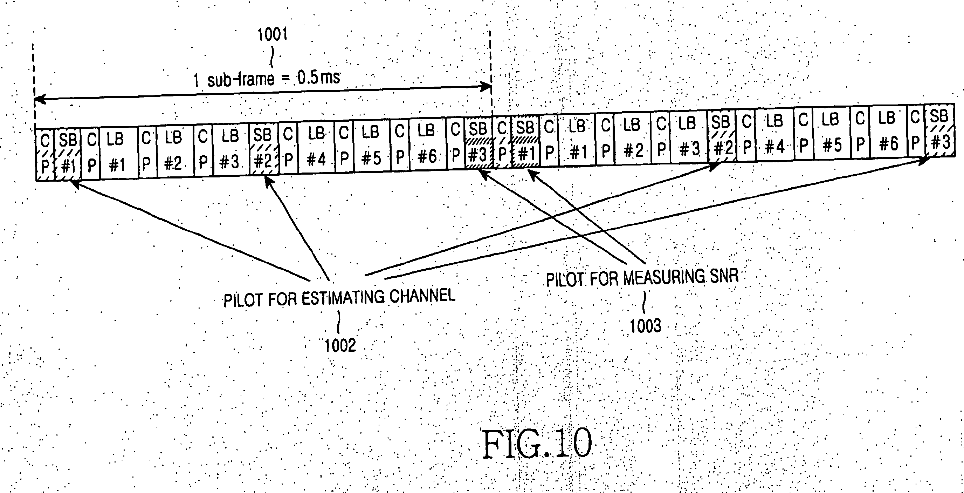

FIG. 10 is a view illustrating another exemplary embodiment of the structure of a uplink frame which is so configured that the frame may support the uplink channels to be scheduled selectively.

Referring to FIG. 10, an overall configuration of the uplink frame is similar to that illustrated in FIG. 9. However there are differences in that adjacent short blocks in FIG. 10 are used to transmit the pilot 1003 for measuring the signal-to-noise ratio. As illustrated in FIG. 10, both an SB#3 and an SB#1 which is adjacent to the SB#3, are used to transmit the pilot 1003 for measuring the signal-to-noise ratio. Adjacent short blocks are used to transmit the pilots 1003 for measuring the signal-to-noise ratio in order that a level of interference plus noise may be easily estimated by measuring a difference between the levels of received signals of the adjacent short blocks, and in order that the final measurement of the signal-to-noise ratio may become easier and more accurate.

The merits and effects of exemplary embodiments, as disclosed and as so configured to operate above, will be described as follows.

According to exemplary embodiments of the present invention, in the mobile communication systems which adopt Orthogonal Frequency Division Multiplexing Access, the process of scheduling is performed with a pilot for measuring the uplink signal-to-noise ratio, and then the volume amount of the uplink overheads may be adaptively controlled in harmony with the states of the system, so that reverse system capacity can be increased.

While the invention has been shown and described with reference to a certain preferred embodiment thereof, it will be understood by those skilled in the art that various changes in form and details may be made therein without departing from the scope of the invention as defined by the appended claims.

## Claims

1. A method for performing channel-selective scheduling at a base station in a mobile communication system adopting Orthogonal Frequency Division Multiple Access, the method comprising:
requiring (703, 803) a terminal to transmit a pilot for supporting channel-selective scheduling;
receiving the pilot from the terminal in response the requiring;
performing (707, 807) channel-selective scheduling for data transmission using the received pilot in order to determine when data can be transmitted and by which orthogonal resources the data can be transmitted from the terminal to the base station;
requiring (709, 809) the terminal to transmit data through the scheduled channel; and
receiving from the terminal the data via the scheduled channel.

2. The method as claimed in claim 1, wherein the step of requiring the terminal to transmit the pilot comprises requiring the terminal to transmit through the whole frequency band or through at least one specified frequency band.

3. The method as claimed in claim 2, wherein the step of receiving of the pilot from the terminal comprises if the terminal transmits through the specified frequency band, receiving the pilot within the specified frequency band or if the terminal transmits through the whole frequency band, receiving the pilot over the whole frequency band.

4. The method as claimed in claim 1, wherein the pilot is used for measuring a signal-to-noise ratio.

5. The method as claimed in claim 1, wherein the channel-selective scheduling for data transmission is performed according to a signal-to-noise ration, SNR, derived from the received pilot.

6. The method as claimed in claim 1, wherein the step of requiring of the terminal to transmit the pilot comprises requiring a transmission of the data, a transmission of a pilot for data demodulation, and a transmission of a pilot for channel-selective scheduling.

7. The method as claimed in claim 1, wherein the step of requiring of the terminal to transmit the pilot comprises employing a grant message.

8. The method as claimed in claim 7, wherein the grant message comprises at least one of a type which represents a type of a message, a MAC ID which represents an identifier of the terminal, a channel ID which represents a band in which the pilot is transmitted, and a period by which the pilot is transmitted.

9. The method as claimed in claim 8, wherein the pilot can be transmitted in a reverse direction either over the whole frequency band or within a specified frequency band depending on the channel ID.

10. The method as claimed in claim 1, further comprising receiving status information from the terminal before performing the requiring of the terminal to transmit the pilot.

11. The method as claimed in claim 1, wherein the data received from the terminal further comprising a pilot for channel estimating which is necessary to demodulate the data.

12. An apparatus for performing channel-selective scheduling at a base station in a mobile communication system adopting Orthogonal Frequency Division Multiple Access, the apparatus comprising:
a receiving unit (503) for receiving a pilot for supporting channel-selective scheduling from a terminal after a base station requires the terminal to transmit the pilot;
a scheduling unit (507) for performing channel-selective scheduling by using the received pilot in order to determine when data can be transmitted and by which orthogonal resources the data can be transmitted from the terminal to the base station, ; and
a transmitting unit (509) for transmitting scheduling information for requiring the terminal to transmit data through the scheduled channel.

13. The apparatus as claimed in claim 12, wherein the pilot is transmitted by the terminal through the whole frequency band or through at least one specified frequency band according to a message transmitted by the base station.

14. The apparatus as claimed in claim 13, wherein the pilot is received within the specified frequency band if the terminal transmits the pilot through the specified frequency band, or received over the whole frequency band if the terminal transmits the pilot through the whole frequency band.

15. The apparatus as claimed in claim 12, wherein the pilot is used for measuring a signal-to-noise ratio.

16. The apparatus as claimed in claim 12, wherein the scheduler performs the channel-selective scheduling data transmission according to a signal-to-noise ration, SNR, derived from the received pilot.

17. The apparatus as claimed in claim 12, wherein the bases station is adapted for requiring the terminal to perform a transmission of the data, a transmission of a pilot for data demodulation, and a transmission of a pilot for channel-selective scheduling.

18. The apparatus as claimed in claim 12, wherein the base station is adapted for requiring the terminal to transmit the pilot by transmitting a grant message that is received by the receiving unit (503).

19. The apparatus as claimed in claim 18, wherein the grant message includes at least one of a type which represents a type of a message, a MAC ID which represents an identifier of the terminal, a channel ID which represents a band in which the pilot is transmitted, and a period by which the pilot is transmitted.

20. The apparatus as claimed in 19, wherein the pilot can be transmitted in a reverse direction by at least one of over the whole frequency band and within at least one specified frequency band depending on the channel ID.

21. The apparatus as claimed in claim 12, further comprising a unit (501) for receiving status information from the terminal before requiring the terminal to transmit the pilot.

22. The apparatus as claimed in claim 12, further comprising a data channel receiving unit (504) for receiving the data further comprising a pilot for channel estimating which is necessary to demodulate the data.

23. An apparatus for performing channel-selective scheduling at a terminal in a mobile communication system adopting Orthogonal Frequency Division Multiple Access, the apparatus comprising:
a unit (602) for receiving from a base station a message requiring to transmit a pilot for selective scheduling by the base station for data transmission according to the signal-to-noise ratio;
a first unit (605) for transmitting the pilot to the base station on the basis of the message; and
a data channel transmitting unit (604) for transmitting data through a scheduled channel, wherein information concerning the scheduled channel are received by the terminal from the base station.

24. The apparatus as claimed in claim 23, wherein the message includes at least one of a type which represents a type of a message, a MAC ID which represents an identifier of the terminal, a channel ID which represents a band in which the pilot is transmitted, and a period by which the pilot is transmitted.

25. The apparatus as claimed in claim 23, further comprising:
a second unit for transmitting a pilot for data demodulation on the basis of the scheduling information.

26. The apparatus as claimed in claim 23, further comprising a unit (603) for transmitting to a base station status information of the terminal by memory capacity of a data buffer (601).

27. A method for performing channel-selective scheduling at a base station in a mobile communication system adopting Orthogonal Frequency Division Multiple Access, the method comprising:
receiving status information transmitted by a terminal;
requesting (703, 803) the terminal to transmit a first pilot signal for supporting channel-selective scheduling;
receiving the first pilot signal from the terminal;
performing (707, 807) channel-selective scheduling using the first pilot signal in order to determining when data can be transmitted and by which orthogonal resources the data can be transmitted from the terminal to the base station;
transmitting (709, 809) a scheduling grant to the terminal; and
receiving data from the terminal, according to said scheduling grant.

28. The method as claimed in claim 27, wherein the step of requesting of the terminal to transmit the first pilot signal occurs only if the status information transmitted by the terminal is received so that transmission resources are not wasted.

29. The method as claimed in claim 27, wherein the step of receiving of the first pilot signal from the terminal comprises receiving the fist pilot signal within at least one specified frequency band or over the whole frequency band.

30. The method as claimed in claim 29, wherein the data received from the terminal comprises the second pilot signal for coherent demodulation of the data.

31. The method as claimed in claim 27, wherein the step of requiring of the terminal to transit the first pilot signal comprises requiring transmission of a pilot for measuring a signal-to-noise ratio, SNR.

32. The method as claimed in claim 27, wherein the step of transmitting of the scheduling grant comprises transmitting a second pilot signal for data demodulation.

33. The method as claimed in claim 32, wherein the step of transmitting of the second pilot is for coherent demodulation of the data received from the terminal.

## Patentansprüche

1. Verfahren zum Durchführen von kanalselektivem Scheduling an einer Basisstation in einem Mobilkommunikationssystem, in dem OFDMA (Orthogonal Frequency Division Multiple Access) eingesetzt wird, wobei das Verfahren umfasst:
Auffordern (703, 803) eines Endgerätes, ein Pilotsignal zur Unterstützung von kanalselektivem Scheduling zu senden;
Empfangen des Pilotsignals von dem Endgerät in Reaktion auf die Aufforderung;
Durchführen (707, 807) von kanalselektivem Scheduling für Datenübertragung unter Verwendung des empfangenen Pilotsignals, um festzustellen, wann Daten gesendet werden können und mit welchen orthogonalen Ressourcen die Daten von dem Endgerät zu der Basisstation gesendet werden können;
Auffordern (709, 809) des Endgerätes, Daten über den zugeordneten Kanal zu senden; und
Empfangen der Daten von dem Endgerät über den zugeordneten Kanal.

2. Verfahren nach Anspruch 1, wobei der Schritt, mit dem das Endgerät aufgefordert wird, das Pilotsignal zu senden, umfasst, dass das Endgerät aufgefordert wird, über das gesamte Frequenzband oder über wenigstens ein angegebenes Frequenzband zu senden.

3. Verfahren nach Anspruch 2, wobei der Schritt des Empfangens des Pilotsignals von dem Endgerät Empfangen des Pilotsignals innerhalb des angegebenen Frequenzbandes, wenn das Endgerät über das angegebene Frequenzband sendet, oder Empfangen des Pilotsignals über das gesamte Frequenzband umfasst, wenn das Endgerät über das gesamte Frequenzband sendet.

4. Verfahren nach Anspruch 1, wobei das Pilotsignal zum Messen eines Signal-Rausch-Verhältnisses verwendet wird.

5. Verfahren nach Anspruch 1, wobei das kanalselektive Scheduling für Datenübertragung entsprechend dem aus dem empfangenen Pilotsignal hergeleiteten Signal-Rausch-Verhältnis durchgeführt wird.

6. Verfahren nach Anspruch 1, wobei der Schritt, mit dem das Endgerät aufgefordert wird, das Pilotsignal zu senden, umfasst, dass eine Übertragung der Daten, eine Übertragung eines Pilotsignals für Datenmodulation und eine Übertragung eines Pilotsignals für kanalselektives Scheduling angefordert wird.

7. Verfahren nach Anspruch 1, wobei der Schritt, mit dem das Endgerät aufgefordert wird, das Pilotsignal zu senden, Verwenden einer Grant-Nachricht umfasst.

8. Verfahren nach Anspruch 7, wobei die Grant-Nachricht wenigstens einen Typ, der einen Typ einer Nachricht darstellt, eine MAC-ID, die eine Kennung des Endgerätes darstellt, eine Kanal-ID, die ein Band darstellt, in dem das Pilotsignal gesendet wird, oder eine Periode umfasst, mit der das Pilotsignal gesendet wird.

9. Verfahren nach Anspruch 8, wobei das Pilotsignal in Abhängigkeit von der Kanal-ID in einer Rückwärtsrichtung entweder über das gesamte Frequenzband oder innerhalb eines angegebenen Frequenzbandes gesendet werden kann.

10. Verfahren nach Anspruch 1, das des Weiteren Empfangen von Statusinformationen von dem Endgerät umfasst, bevor das Endgerät aufgefordert wird, das Pilotsignal zu senden.

11. Verfahren nach Anspruch 1, wobei die von dem Endgerät empfangenen Daten des Weiteren ein Pilotsignal für Kanalschätzung umfassen, die zum Demodulieren der Daten erforderlich ist.

12. Vorrichtung zum Durchführen von kanalselektivem Scheduling an einer Basisstation in einem Mobilkommunikationssystem, in dem OFDMA (Orthogonal Frequency Division Multiple Access) eingesetzt wird, wobei die Vorrichtung umfasst:
eine Empfangseinheit (503) zum Empfangen eines Pilotsignals zur Unterstützung von kanalselektivem Scheduling von einem Endgerät, nachdem eine Basisstation das Endgerät aufgefordert hat, das Pilotsignal zu senden;
eine Scheduling-Einheit (507), mit der kanalselektives Scheduling unter Verwendung des empfangenen Pilotsignals durchgeführt wird, um festzustellen, wann Daten gesendet werden können und mit welchen orthogonalen Ressourcen die Daten von dem Endgerät zu der Basisstation gesendet werden können; und
eine Sendeeinheit (509) zum Senden von Scheduling-Informationen, mit denen das Endgerät aufgefordert wird, Daten über den zugeordneten Kanal zu senden.

13. Vorrichtung nach Anspruch 12, wobei das Pilotsignal durch das Endgerät entsprechend einer durch die Basisstation gesendeten Nachricht über das gesamte Frequenzband oder über wenigstens ein angegebenes Frequenzband gesendet wird.

14. Vorrichtung nach Anspruch 13, wobei das Pilotsignal innerhalb des angegebenen Frequenzbandes empfangen wird, wenn das Endgerät das Pilotsignal über das angegebene Frequenzband sendet, oder über das gesamte Frequenzband empfangen wird, wenn das Endgerät das Pilotsignal über das gesamte Frequenzband sendet.

15. Vorrichtung nach Anspruch 12, wobei das Pilotsignal zum Messen eines Signal-Rausch-Verhältnisses verwendet wird.

16. Vorrichtung nach Anspruch 12, wobei die Scheduling-Einrichtung das kanalselektive Scheduling für Datenübertragung entsprechend einem aus dem empfangenen Pilotsignal hergeleiteten Signal-Rausch-Verhältnis durchführt.

17. Vorrichtung nach Anspruch 12, wobei die Basisstation so eingerichtet ist, dass sie das Endgerät auffordert, eine Übertragung der Daten, eine Übertragung eines Pilotsignals für Datenmodulation und eine Übertragung eines Pilotsignals für kanalselektives Scheduling durchzuführen.

18. Vorrichtung nach Anspruch 12, wobei die Basisstation so eingerichtet ist, dass sie das Endgerät auffordert, das Pilotsignal zu senden, indem sie eine Grant-Nachricht sendet, die durch die Empfangseinheit (503) empfangen wird.

19. Vorrichtung nach Anspruch 18, wobei die Grant-Nachricht wenigstens einen Typ, der einen Typ einer Nachricht darstellt, eine MAC-ID, die eine Kennung des Endgerätes darstellt, eine Kanal-ID, die ein Band darstellt, in dem das Pilotsignal gesendet wird, oder eine Periode umfasst, mit der das Pilotsignal gesendet wird.

20. Vorrichtung nach Anspruch 19, wobei das Pilotsignal in Abhängigkeit von der Kanal-ID in einer Rückwärtsrichtung über wenigstens das gesamte Frequenzband oder innerhalb wenigstens eines angegebenen Frequenzbandes gesendet werden kann.

21. Vorrichtung nach Anspruch 12, die des Weiteren eine Einheit (501) umfasst, mit der Statusinformationen von dem Endgerät empfangen werden, bevor das Endgerät aufgefordert wird, das Pilotsignal zu senden.

22. Vorrichtung nach Anspruch 12, die des Weiteren eine Datenkanal-Empfangseinheit (504) umfasst, mit der die Daten empfangen werden, die des Weiteren ein Pilotsignal für Kanalschätzung umfassen, die zum Demodulieren der Daten erforderlich ist.

23. Vorrichtung zum Durchführen von kanalselektivem Scheduling an einem Endgerät in einem Mobilkommunikationssystem, in dem OFDMA (Orthogonal Frequency Division Multiple Access) eingesetzt wird, wobei die Vorrichtung umfasst:
eine Einheit (602) zum Empfangen einer Nachricht von einer Basisstation, mit der aufgefordert wird, ein Pilotsignal für selektives Scheduling durch die Basisstation für Datenübertragung entsprechend dem Signal-Rausch-Verhältnis zu senden;
eine erste Einheit (605) zum Senden des Pilotsignals zu der Basisstation auf Basis der Nachricht; und
eine Datenkanal-Sendeeinheit (604) zum Senden von Daten über einen zugeordneten Kanal, wobei Informationen, die den zugeordneten Kanal betreffen, durch das Endgerät von der Basisstation empfangen werden.

24. Vorrichtung nach Anspruch 23, wobei die Nachricht wenigstens einen Typ, der einen Typ einer Nachricht darstellt, eine MAC-ID, die eine Kennung des Endgerätes darstellt, eine Kanal-ID, die ein Band darstellt, in dem das Pilotsignal gesendet wird, oder eine Periode enthält, mit der das Pilotsignal gesendet wird.

25. Vorrichtung nach Anspruch 23, die des Weiteren umfasst:
eine zweite Einheit zum Senden eines Pilotsignals für Datendemodulation auf Basis der Scheduling-Informationen.

26. Vorrichtung nach Anspruch 23, die des Weiteren eine Einheit (603) zum Senden von Statusinformationen des Endgerätes bezüglich der Speicherkapazität eines Datenpuffers (601) zu einer Basisstation umfasst.

27. Verfahren zum Durchführen von kanalselektivem Scheduling an einer Basisstation in einem Mobilkommunikationssystem, in dem OFDMA (Orthogonal Frequency Division Multiple Access) eingesetzt wird, wobei das Verfahren umfasst:
Empfangen von Statusinformationen, die durch ein Endgerät gesendet werden;
Auffordern (703, 803) des Endgerätes, ein erstes Pilotsignal zur Unterstützung von kanalselektivem Scheduling zu senden;
Empfangen des ersten Pilotsignals von dem Endgerät;
Durchführen (707, 807) von kanalselektivem Scheduling unter Verwendung des ersten Pilotsignals, um festzustellen, wann Daten gesendet werden können, und mit welchen orthogonalen Ressourcen die Daten von dem Endgerät zu der Basisstation gesendet werden können;
Senden (709, 809) eines Scheduling-Grant zu dem Endgerät; und
Empfangen von Daten von dem Endgerät entsprechend dem Scheduling-Grant.

28. Verfahren nach Anspruch 27, wobei der Schritt, mit dem das Endgerät aufgefordert wird, das erste Pilotsignal zu senden, nur stattfindet, wenn die durch das Endgerät gesendeten Statusinformationen empfangen werden, so dass keine Senderessourcen verschwendet werden.

29. Verfahren nach Anspruch 27, wobei der Schritt des Empfangenes des ersten Pilotsignals von dem Endgerät Empfangen des ersten Pilotsignals innerhalb wenigstens eines angegebenen Frequenzbandes oder über das gesamte Frequenzband umfasst.

30. Verfahren nach Anspruch 29, wobei die von dem Endgerät empfangenen Daten das zweite Pilotsignal für kohärente Demodulation der Daten umfassen.

31. Verfahren nach Anspruch 27, wobei der Schritt, mit dem das Endgerät aufgefordert wird, das erste Pilotsignal zu senden, umfasst, dass Senden eines Pilotsignals zum Messen eines Signal-Rausch-Verhältnisses angefordert wird.

32. Verfahren nach Anspruch 27, wobei der Schritt des Sendens des Scheduling-Grant Senden eines zweiten Pilotsignals für Datendemodulation umfasst.

33. Verfahren nach Anspruch 32, wobei der Schritt des Sendens des zweiten Pilotsignals kohärenter Demodulation der von dem Endgerät empfangenen Daten dient.

## Revendications

1. Procédé pour effectuer une programmation sélective par canal dans une station de base d'un système de communication mobile à accès multiple par répartition orthogonale de fréquence, le procédé comprenant :
la demande (703, 803) à un terminal de transmettre un pilote pour prendre en charge la programmation sélective par canal ;
la réception du pilote depuis le terminal en réponse à la demande ;
la mise en oeuvre (707, 807) d'une programmation sélective par canal pour la transmission de données en utilisant le pilote reçu de manière à déterminer quand des données peuvent être transmises et par quelles ressources orthogonales les donnés peuvent être transmises depuis le terminal vers la station de base ;
la demande (709, 809) au terminal de transmettre des données via le canal programmé ; et
la réception des données depuis le terminal via le canal programmé.

2. Procédé selon la revendication 1, dans lequel l'étape de demande au terminal de transmettre le pilote comprend la demande au terminal de transmettre via la bande de fréquence complète ou via au moins une bande de fréquence spécifiée.

3. Procédé selon la revendication 2, dans lequel l'étape de réception du pilote depuis le terminal comprend, si le terminal transmet via la bande de fréquence spécifiée, la réception du pilote dans la bande de fréquence spécifiée ou, si le terminal transmet via la bande de fréquence complète, la réception du pilote via la bande de fréquence complète.

4. Procédé selon la revendication 1, dans lequel le pilote est utilisé pour mesurer un rapport signal sur bruit.

5. Procédé selon la revendication 1, dans lequel la programmation sélective par canal pour la transmission de données est effectuée selon un rapport signal sur bruit, RSB, provenant du pilote reçu.

6. Procédé selon la revendication 1, dans lequel l'étape de demande au terminal de transmettre le pilote comprend la demande d'une transmission des données, d'une transmission d'un pilote pour la démodulation de données et d'une transmission d'un pilote pour la programmation sélective par canal.

7. Procédé selon la revendication 1, dans lequel l'étape de demande au terminal de transmettre le pilote comprend l'utilisation d'un message d'attribution.

8. Procédé selon la revendication 7, dans lequel le message d'attribution comprend au moins un type représentant un type de message, un identifiant MAC représentant un identifiant du terminal, un identifiant de canal représentant une bande dans laquelle le pilote est transmis et une période durant laquelle le pilote est transmis.

9. Procédé selon la revendication 8, dans lequel le pilote peut être transmis en direction inverse soit sur la bande de fréquence complète, soit dans une bande de fréquence spécifiée, en fonction de l'identifiant de canal.

10. Procédé selon la revendication 1, comprenant en outre la réception d'informations d'état du terminal avant d'effectuer la demande au terminal pour la transmission du pilote.

11. Procédé selon la revendication 1, dans lequel les données reçues du terminal comprennent en outre un pilote pour la détermination du canal nécessaire pour démoduler les données.

12. Appareil pour effectuer une programmation sélective par canal dans une station de base d'un système de communication mobile à accès multiple par répartition orthogonale de fréquence, l'appareil comprenant en outre :
une unité de réception (503) pour recevoir un pilote de prise en charge de programmation sélective par canal d'un terminal après la demande par une station de base au terminal pour la transmission du pilote ;
une unité de programmation (507) pour effectuer une programmation sélective par canal en utilisant le pilote reçu de manière à déterminer quand des données peuvent être transmises et par quelles ressources orthogonales les données peuvent être transmise permettant de transmettre les données de ressources orthogonales depuis le terminal vers la station de base ; et
une unité de transmission (509) pour transmettre des informations de programmation afin de demander au terminal de transmettre des données via le canal programmé.

13. Appareil selon la revendication 12, dans lequel le pilote est transmis par le terminal via la bande de fréquence complète ou via au moins une bande de fréquence spécifiée selon un message transmis par la station de base.

14. Appareil selon la revendication 13, dans lequel le pilote est reçu dans la bande de fréquence spécifiée si le terminal transmet le pilote via la bande de fréquence spécifiée ou est reçu dans la bande de fréquence complète si le terminal transmet le pilote via la bande de fréquence complète.

15. Appareil selon la revendication 12, dans lequel le pilote est utilisé pour mesurer un rapport signal sur bruit.

16. Appareil selon la revendication 12, dans lequel le programmateur effectue la transmission de données via programmation sélective par canal selon un rapport signal sur bruit, RSB, provenant du pilote reçu.

17. Appareil selon la revendication 12, dans lequel la station de base est adaptée pour demander au terminal d'effectuer une transmission des données, une transmission d'un pilote pour la démodulation de données et une transmission d'un pilote pour la programmation sélective par canal.

18. Appareil selon la revendication 12, dans lequel la station de base est adaptée pour demander au terminal de transmettre le pilote en transmettant un message d'attribution qui est reçu par l'unité de réception (503).

19. Appareil selon la revendication 18, dans lequel le message d'attribution comprend au moins un type représentant un type de message, un identifiant MAC représentant un identifiant du terminal, un identifiant de canal représentant une bande dans laquelle le pilote est transmis et une période durant laquelle le pilote est transmis.

20. Appareil selon la revendication 19, dans lequel le pilote peut être transmis en direction inverse dans la bande de fréquence complète ou dans au moins une bande de fréquence spécifiée en fonction de l'identifiant de canal.

21. Appareil selon la revendication 12, comprenant en outre une unité (501) pour recevoir des informations d'état du terminal avant d'effectuer la demande au terminal pour la transmission du pilote.

22. Appareil selon la revendication 12, comprenant en outre une unité de réception (504) de canal de données pour recevoir les données, ainsi qu'un pilote afin de déterminer le canal nécessaire pour démoduler les données.

23. Appareil pour effectuer une programmation sélective par canal dans un terminal d'un système de communication mobile à accès multiple par répartition orthogonale de fréquence, l'appareil comprenant en outre :
une unité (602) de réception d'un message depuis une station de base demandant la transmission d'un pilote pour la programmation sélective par la station de base afin de transmettre les données en fonction du rapport signal sur bruit ;
une première unité (605) pour transmettre le pilote vers la station de base en fonction du message ; et
une unité de transmission (604) de canal de données pour la transmission de données via un canal programmé, dans lequel des informations concernant le canal programmé sont reçues par le terminal depuis la station de base.

24. Appareil selon la revendication 23, dans lequel le message comprend au moins un type représentant un type de message, un identifiant MAC représentant un identifiant du terminal, un identifiant de canal représentant une bande dans laquelle le pilote est transmis et une période durant laquelle le pilote est transmis.

25. Appareil selon la revendication 23, comprenant en outre :
une seconde unité pour transmettre un pilote de démodulation de données en fonction des informations de programmation.

26. Appareil selon la revendication 23, comprenant en outre une unité (603) pour transmettre des informations d'état du terminal à une station de base via la capacité de mémoire d'un tampon de données (601).

27. Procédé pour effectuer une programmation sélective par canal dans une station de base d'un système de communication mobile à accès multiple par répartition orthogonale de fréquence, le procédé comprenant:
la réception d'informations d'état transmises par un terminal;
la demande (703, 803) au terminal de transmettre un premier signal pilote pour prendre en charge une programmation sélective par canal ;
la réception du premier signal pilote par le terminal;
la mise en oeuvre (707, 807) d'une programmation sélective par canal en utilisant le premier signal pilote de manière à déterminer quand des données peuvent être transmises et par quelles ressources orthogonales les données peuvent être transmise depuis le terminal vers la station de base ;
la transmission (709, 809) d'une attribution de programmation vers le terminal ; et
la réception de données depuis le terminal en fonction de ladite attribution de programmation.

28. Procédé selon la revendication 27, dans lequel l'étape de demande au terminal de transmettre le premier signal pilote est mise en oeuvre uniquement si les informations d'état transmises par le terminal sont reçues, de manière à ne pas consommer inutilement des ressources de transmission.

29. Procédé selon la revendication 27, dans lequel l'étape de réception du premier signal pilote depuis le terminal comprend la réception du premier signal pilote dans au moins une bande de fréquence spécifiée ou dans la bande de fréquence complète.

30. Procédé selon la revendication 29, dans lequel les données reçues depuis le terminal comprennent le second signal pilote pour une démodulation cohérente des données.

31. Procédé selon la revendication 27, dans lequel l'étape de demande au terminal pour faire transiter le premier signal pilote comprend la demande de transmission d'un pilote pour mesurer un rapport signal sur bruit, RSB.

32. Procédé selon la revendication 27, dans lequel l'étape de transmission de l'attribution de programmation comprend la transmission d'un second signal pilote pour la démodulation de données.

33. Procédé selon la revendication 32, dans lequel l'étape de transmission du second signal pilote permet une démodulation cohérente des données reçues depuis le terminal.
